# EUROPÄISCHE PATENTSCHRIFT

(11) **EP 3 992 483 B1**
(45) Veröffentlichungstag und Bekanntmachung des Hinweises auf die Patenterteilung: **06.11.2024**
(21) Anmeldenummer: 21198205.3
(22) Anmeldetag: 22.09.2021
(51) Int. Cl.: F16D 3/18, F16H 57/025, F16H 57/033, H02K 7/116

(54) **ANTRIEBSEINHEIT AUS EINEM MOTOR, EINEM GETRIEBE UND EINER DIESE VERBINDENDEN KUPPLUNG**
DRIVE UNIT COMPRISING A MOTOR, A GEARBOX AND A COUPLING CONNECTING THE SAME
UNITÉ D'ENTRAÎNEMENT COMPOSÉE D'UN MOTEUR, D'UN ENGRENAGE ET D'UN ACCOUPLEMENT LES RELIANT

(30) Priorität: 02.11.2020 DE 102020128735
(43) Veröffentlichungstag der Anmeldung: 04.05.2022
(73) Patentinhaber: EBM-PAPST ST. GEORGEN GMBH & CO. KG, 78112 St. Georgen (DE)
(72) Erfinder: SILBERHORN, Richard, 90530 Wendelstein (DE); PORT, Fabian, 91054 Erlangen (DE)
(74) Vertreter: Staeger & Sperling Partnerschaftsgesellschaft mbB

(56) Entgegenhaltungen:
- EP-A1- 1 326 032
- EP-A2- 1 091 144
- DE-A1- 102011 013 918
- DE-A1- 102013 003 165
- DE-A1- 102017 010 371
- DE-A1- 19 647 063
- DE-A1- 19 848 324

## Beschreibung

Die Erfindung betrifft ein System zur Herstellung einer Antriebseinheit gemäß Anspruch 1.

Antriebseinheiten mit einer einheitlichen Schnittstelle von Motor und Getriebe sind gängig und im Stand der Technik bekannt. Solche Schnittstellen bzw. Kupplungen werden überwiegend mit Hilfe von sogenannten Wellenkupplungen (Metallbalg-, Elastomer-, Wendel-, Klauenkupplung) realisiert, wodurch die eingangsseitige Welle eines Getriebes und die Welle eines Motors in Form einer kraftschlüssigen Klemmverbindung verbunden werden. Fluchtungs- und Winkelfehlern zwischen den Achsen der Wellen können dabei bis zu einem gewissen Grad durch elastische Verformung ausgeglichen werden.

Daraus folgt jedoch, dass beim Einsatz solcher Wellenkupplungen systembedingt eine automatisierte Montage von Motor und Getriebe kaum realisierbar bzw. meist nicht möglich ist.

Hinzukommt auch, dass die bekannten Kupplungen oftmals vergleichsweise groß und somit bauraumintensiv sind.

Verschiedene Antriebseinheiten oder Kupplungen zur Verbindung eines Motors mit einem Getriebe sind beispielsweise aus den Dokumenten DE 198 48 324 A1, DE 196 47 063 A1 und DE 10 2017 010 371 A1 bekannt.

Der Erfindung liegt deshalb die Aufgabe zugrunde, die vorgenannten Nachteile zu überwinden und eine Antriebseinheit sowie ein System zur Herstellung einer Antriebseinheit mit einer Kupplung zum einfachen Verbinden einer Welle eines Motors mit einer eingangsseitigen Welle bzw. Antriebswelle eines Getriebes bereitzustellen, welche kompakt ist, einen Ausgleich eines Achsversatzes ermöglicht und zugleich für eine automatisierte Montage geeignet ist.

Diese Aufgabe wird durch die Merkmalskombination gemäß Patentanspruch 1 und 12 gelöst.

Erfindungsgemäß wird ein System zur Herstellung einer Antriebseinheit aus einem Motor, einem Getriebe und einer Kupplung gemäß Anspruch 1 vorgeschlagen. Der Motor ist aus einer Gruppe von Motoren und das Getriebe aus einer Gruppe von Getrieben auswählbar. Die Kupplung ist ausgebildet, ein Antriebsmoment von einer Welle des Motors auf eine eingangsseitige Welle bzw. Antriebswelle des Getriebes zu übertragen. Die Kupplung weist ein Stirnrad und eine Kupplungshülse auf, wobei das Stirnrad drehfest mit der Welle des Motors und die Kupplungshülse drehfest mit der Antriebswelle des Getriebes verbunden sind. Das Stirnrad weist zudem eine Stirnverzahnung und die Kupplungshülse weist eine Innenverzahnung auf, welche korrespondierend zueinander ausgebildet sind, eine Steckverbindung bilden und darüber hinaus derart ausgebildet sind, dass die Stirnverzahnung kraftfrei in die Innenverzahnung einsteckbar ist.

Die Grundidee der Erfindung ist die Entwicklung bzw. Bereitstellung einer universellen Schnittstelle zwischen einem Motor und einem Getriebe und der daraus gebildeten Antriebseinheit, so dass verschiedene Motoren mit verschiedenen Getrieben kombiniert werden können. Hierdurch wird die Bereitstellung von Antriebseinheiten bzw. deren Herstellung von definierten und festgelegten Kombinationen unabhängiger, so dass ein eventuell vorhandener Lagerbestand verschiedener Motoren und verschiedener Getriebe reduziert und die Lieferzeiten gegenüber einem Endkunden verkürzt werden können.

Insbesondere bei einer hohen Variantenvielfalt bei den Motoren und Getrieben war es bisher nicht möglich, diese "frei" zu kombinieren, was durch die vorliegend vorgeschlagene Antriebseinheit und das zugehörige System möglich werden soll.

Die Kupplungshülse kann auch als eine Nabe und/oder integral mit der antriebsseitigen Welle bzw. der Antriebswelle des Getriebes ausgebildet sein. Alternativ kann die Kupplungshülse beispielsweise auf die Antriebswelle bzw. einen Wellenzapfen der Antriebswelle aufgeschoben und an diesem drehfest fixiert sein.

Gemäß der Erfindung, ist der Motor entsprechend aus einer Gruppe von Motoren auswählbar, welche sich bezüglich ihrer Abmessungen und optional Leistungsdaten unterscheiden.

Ferner kann hierfür vorgesehen sein, dass alle Motoren der Gruppe von Motoren jeweils eine identisch ausgebildete Welle aufweisen, so dass das Stirnrad ohne weitere Anpassungen auf die Welle eines jeweiligen Motors aufgebracht und an dieser fixiert werden kann.

Darüber hinaus sieht die Erfindung auch vor, dass auch das Getriebe aus einer Gruppe von Getrieben auswählbar ist, welche sich bezüglich ihrer Abmessungen und optional Leistungsdaten unterscheiden. Als Leistungsdaten werden bei Getrieben auch insbesondere Übersetzungsverhältnisse, die Anzahl von Über- bzw. Untersetzungsstufen und/oder die maximal übertragbaren Drehmomente verstanden.

Vorteilhaft ist auch, wenn die Kupplungshülse integral als die Antriebs- bzw. eingangsseitige Welle des Getriebes oder integral mit der Antriebswelle des Getriebes ausgebildet ist, so dass das auf die Kupplungshülse übertragene Drehmoment unmittelbar auf das Getriebe bzw. auf die antriebsseitige Antriebswelle des Getriebes wirkt. Alternativ kann die Kupplungshülse in die Antriebswelle des Getriebes reibschlüssig, formschlüssig oder stoffschlüssig bzw. insbesondere eingepresst, eingeklebt oder über eine Verzahnung drehfest mit der Antriebswelle verbunden sein.

Entsprechend ist auch hierbei vorteilhaft, dass die Antriebswelle alle Getriebe der Gruppe von Getrieben eine identisch ausgebildete Antriebswelle aufweisen können, welche einheitlich mit der Kupplungshülse fügbar sind und/oder jeweils als einheitliche Kupplungshülse ausgebildet sind.

Statt die aus der Stirnverzahnung und der Innenverzahnung gebildete Steckverbindung als eine Passverzahnung, beispielsweise nach DIN 5480, vorzusehen, wie es im Stand der Technik meist vorgeschlagen wird, ist die Stirnverzahnung bei einer weiteren vorteilhaften Weiterbildung als eine Evolventenverzahnung und vorzugsweise gemäß DIN 867 ausgebildet, so dass ein größeres maximales Verzahnungsspiel und entsprechend ein höherer Toleranzausgleich in Radialrichtung der Stirnverzahnung gegenüber der korrespondierend ausgebildeten Kupplungshülse möglich ist und die Stirnverzahnung sowie die Innenverzahnung mit bekannten und standardisierten Werkzeugen herstellbar sind.

Das Stirnrad ist vorzugsweise durch Reibschluss oder Formschluss drehfest mit der Welle des Motors verbunden.

In einem Idealfall, sind die Rotationsachse des Stirnrades und die Rotationsachse der Kupplungshülse deckungsgleich bzw. das Stirnrad und die Kupplungshülse koaxial. Da die Herstellung einer solchen koaxialen Ausrichtung jedoch aufwändig und kostenintensiv ist, kann weiter vorgesehen sein, dass zwischen der Stirnverzahnung und der Innenverzahnung ein Verzahnungsspiel vorgesehen ist. Das Verzahnungsspiel bzw. das Spiel zwischen der Stirnverzahnung und der Innenverzahnung ist ausgebildet, einen angularen und/oder achsparallelen Versatz einer Rotationsachse des Stirnrades und einer Rotationsachse der Kupplungshülse zueinander auszugleichen, so dass die Rotationsachsen nicht zwingend deckungsgleich sein müssen und Abweichungen bis zu einer vorbestimmten Toleranz zugelassen werden können.

Liegt eine Fluchtungsabweichung der Welle des Motors zu der Antriebswelle des Getriebes bzw. des Stirnrades zu der Kupplungshülse vor, so dass die jeweiligen Rotationsachsen nicht deckungsgleich sind, bewegen sich die Zähne des Stirnrades während einer Umdrehung des Stirnrades um dessen Rotationsachse innerhalb der jeweiligen korrespondierenden durch die Innenverzahnung der Kupplungshülse gebildeten Zahnlücken der Kupplungshülse zyklisch auf und ab. Dieser Umstand führt zur Reibungs- und damit Wärmeentwicklung sowie damit einhergehenden Verlusten, welche jedoch für den durch das Verzahnungsspiel realisierten Versatz- bzw. Toleranzausgleich in Kauf genommen wird. Ferner können die Reibungs- und Wärmeverluste durch die Verwendung von Schmierstoffen und/oder gleitfähigen und vorzugsweise abriebfesten Materialien für das Stirnrad und die Kupplungshülse minimiert werden.

Um den Motor mit dem Getriebe sowie mit der Motor und Getriebe verbindenden Kupplung in einfacher Weise kombinieren zu können, sieht die Erfindung vor, dass die Antriebseinheit oder vorzugsweise die Kupplung ferner ein Kupplungsgehäuse aufweist, welches drehfest an einem Getriebegehäuse des Getriebes und einem Motorgehäuse des Motors fixierbar bzw. fixiert ist. Das Kupplungsgehäuse ist zudem ausgebildet, den Motor drehfest mit dem Getriebe zu verbinden.

Ist ein Kupplungsgehäuse vorgesehen, ist zudem eine Weiterbildung vorteilhaft, bei welcher das Kupplungsgehäuse die aus dem Stirnrad und der Kupplungshülse gebildete Steckverbindung in Umfangrichtung, also insbesondere in Umfangsrichtung deren vorzugsweise im Wesentlichen deckungsgleichen Rotationsachsen, umläuft. Ferner ist das Kupplungsgehäuse ausgebildet, die Steckverbindung gegenüber einer Umgebung der Antriebseinheit abzudichten, so dass beispielsweise die Kupplung schmierende Fluide nicht aus der Kupplung austreten und keine Fremdkörper in die Kupplung eindringen können.

Um eine Montage zu vereinfachen, kann das Kupplungsgehäuse Zentrier-und/oder Ausrichtungselemente und insbesondere eine Axialführung aufweisen, entlang welcher das Motorgehäuse und/oder das Getriebegehäuse in das Kupplungsgehäuse geführt einsteckbar sind/ist. Dabei kann die Axialführung bzw. können die Zentrier- und/oder Ausrichtungselemente auch kodiert sein, so dass das Motorgehäuse und/oder das Getriebegehäuse nur in einer vorbestimmten Positionierung zueinander fügbar sind.

Alternativ zu einer Axialführung, durch welche ein geführtes Einstecken ermöglicht wird, kann das Kupplungsgehäuse auch Schnittstellen aufweisen, durch welche dieser auf eine abtriebsseitige Stirnfläche des Motors und eine antriebsseitige Stirnfläche des Getriebes montierbar ist.

Sind die Motoren aus einer Gruppe von Motoren und/oder die Getriebe aus einer Gruppe von Getrieben auswählbar, kann ferner vorgesehen sein, dass zu dem Kupplungsgehäuse korrespondierende Führungsflächen oder Schnittstellen bei allen Motoren bzw. Getrieben der jeweiligen Gruppe identisch ausgebildet sind.

An dem Kupplungsgehäuse und an dem Motor und/oder dem Getriebe können als Schnittstellen oder als Teil der Schnittstellen beispielsweise zueinander korrespondierende Befestigungselemente vorgesehen sein, um diese Komponenten miteinander fixieren zu können.

Um das Stirnrad und die Kupplungshülse für das Fügen bzw. für die Montage miteinander in eine die Montage vereinfachende Position bringen zu können, in welcher beispielsweise die Verzahnungen unmittelbar ineinander eingreifen, ohne nochmals verdreht oder ausgerichtet werden zu müssen, sieht eine weitere vorteilhafte Variante vor, dass an dem Motor und/oder an dem Getriebe und/oder an der Kupplung bzw. an dem Kupplungsgehäuse zumindest eine Positionierungsmarkierung zur Montage der Kupplung bzw. des nachfolgend näher erläuterten Systems mit dem Stirnrad und/oder der Kupplungshülse in einer vorbestimmten Drehwinkelposition vorgesehen ist.

Vorzugsweise ist vorgesehen, dass der Motor und das an dem Motor bzw. dessen Welle montierte Stirnrad eine Motoreinheit und das Getriebe mit dem Kupplungsgehäuse und der an der eingangsseitigen Welle des Getriebes montierten Kupplungshülse eine Getriebeeinheit bilden. Um die Motoreinheit mit der Getriebeeinheit verbinden zu können, kann an der Motoreinheit ein Motorflansch und an der Getriebeeinheit eine dazu korrespondierende Schnittstelle vorgesehen sein.

Durch das System zur Herstellung einer solchen Antriebseinheit kann unter Verwendung einer spielbehafteten und aus Stirnrad und Kupplungshülse gebildeten Steckverbindung ein Ausgleich von Fluchtungsfehlern in der Ebene sowie von Winkelfehlern der Rotationsachsen in kostengünstiger und bauraumkompakter Weise bereitgestellt werden, wobei die Antriebseinheit flexibel aus verschiedenen Motoren und verschiedenen Getrieben bildbar ist, welche durch die Verwendung der Steckverbindung zudem eine im Wesentlichen gleichmäßige Kraft- bzw. Drehmomentübertragung zwischen dem Motor und dem Getriebe bereitstellt.

Darüber hinaus ist es möglich, die Getriebe und Motoren jeweils separat zu montieren und auf ihre Qualität zu prüfen, da die Endmontage der Antriebseinheit aus den separat ausgebildeten Komponenten unter Verwendung der Kupplung nachfolgend ausgeführt werden kann.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine teilmontierte Antriebseinheit;
- Fig. 2: einen Schnitt durch die Steckverbindung.

Die Figuren sind beispielhaft schematisch. Gleiche Bezugszeichen in den Figuren weisen auf gleiche funktionale und/oder strukturelle Merkmale hin.

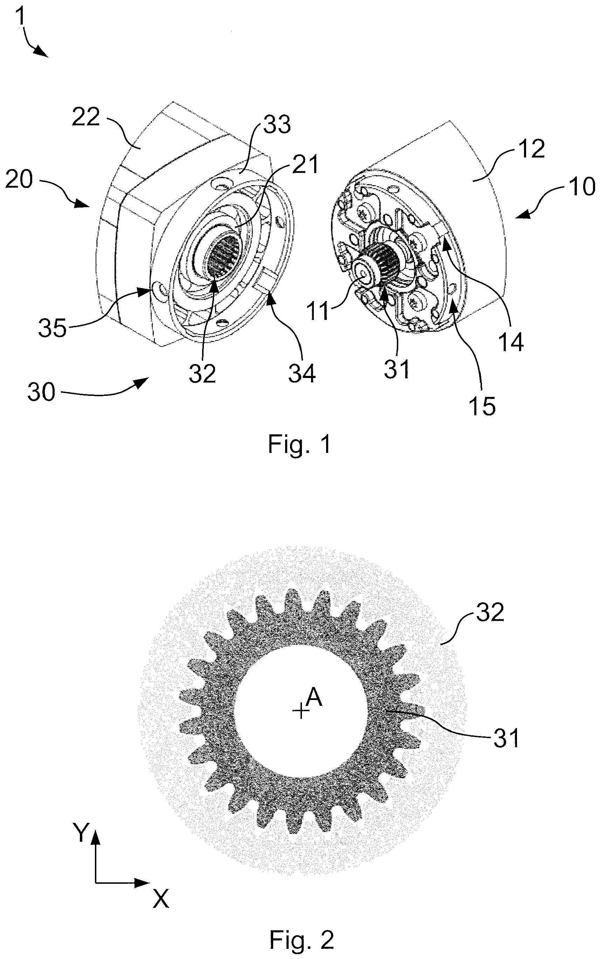

In Figur 1 ist die Antriebseinheit 1 abschnittsweise dargestellt, wobei der Motor 10 mit dem auf die Welle 11 des Motors 10 aufgeschrumpften Stirnrad 31 der Kupplung 30 noch separat von dem Getriebe 20 vorgesehen ist. An dem Getriebe 20 bzw. eingepresst in die Antriebswelle 21 des Getriebes 20 ist die Kupplungshülse 32 vorgesehen, wobei an einem Gehäuse 22 des Getriebes 20 bereits ein Kupplungsgehäuse 33 montiert ist, durch welchen das Getriebe 20 drehfest mit dem Motor 10 bzw. deren jeweiligen Gehäuse 22, 12 drehfest miteinander verbindbar sind.

Gemäß dem vorgeschlagenen System bzw. gemäß der vorgeschlagenen Antriebseinheit können der Motor 10 und das Getriebe 20 separat voneinander montiert und getestet werden, wobei bei dem Testen bzw. Prüfen die jeweils zugehörigen Komponente der Kupplung 30 bereits mit dem Motor 10 bzw. dem Getriebe 20 verbunden sein können. Das Stirnrad 31 wird also bereits vor der Überprüfung mit der Welle 11 und die Kupplungshülse 32 in die Antriebswelle 21 gefügt.

Anschließend kann der Motor 10 mit dem Getriebe 20 durch das Kupplungsgehäuse 33 verbunden werden. Das Kupplungsgehäuse 33 sowie die Kupplungshülse 32 sind vorzugsweise integral mit dem Getriebe 20 bereitgestellt, so dass das Getriebe 20 mit dem Kupplungsgehäuse 33 und der Kupplungshülse 32 eine Getriebeeinheit bildet.

Um die Komponenten in einfacher und vorbestimmter Weise fügen zu können, sind an dem Kupplungsgehäuse 33 mehrere Zentrier- und Ausrichtungselemente vorgesehen, welche vorliegend durch Axialführungen 34 realisiert sind, entlang derer vorliegend der Motor 10 bzw. das Gehäuse 12 des Motors 10 mit zugehörigen Zentrier- bzw. Gleitflächen 14 entlang geführt und in das Kupplungsgehäuse 33 eingesteckt werden kann.

Beim Einstecken der aus Motor 10 und Stirnrad 31 gebildeten Motoreinheit in das Kupplungsgehäuse 33 wird zugleich die Steckverbindung aus der Außenverzahnung des Stirnrades 31 und der Innenverzahnung der Kupplungshülse 32 hergestellt, so dass über die Verzahnung ein Drehmoment von dem Motor 10 auf das Getriebe 20 übertragbar ist.

Um den Motor 10 bzw. dessen Gehäuse 12 in dem Kupplungsgehäuse 33 fixieren zu können, sind vorliegend Befestigungselemente 35 an dem Kupplungsgehäuse 33 und Befestigungselemente 15 an dem Motor 10 vorgesehen, durch welche das Kupplungsgehäuse 33 an dem Gehäuse 12 des Motors 10 verschraubt werden kann.

Ein sich durch die Verschraubung oder durch die Fertigungstoleranzen des Getriebes 20, des Motors 10 oder der Kupplung 30 ergebender Versatz zwischen den Rotationsachsen der Welle 11 bzw. dem Stirnrad 31 und der Antriebswelle 21 bzw. der Kupplungshülse 32, kann durch die gewählte Verzahnung der Steckverbindung ausgeglichen werden.

Hierfür ist in Figur 2 ein Querschnitt durch die aus der Kupplungshülse 32 und dem Stirnrad 31 gebildete Steckverbindung dargestellt, in welcher insbesondere auch die vom Stirnrad 31 ausgehende Außenverzahnung und die von der Kupplungshülse 32 ausgehende Innenverzahnung sichtbar ist, welche ineinander eingreifen.

Beispielhaft ist ein Idealfall dargestellt, bei welchem die Rotationsachsen des Stirnrades 31 und der Kupplungshülse 32 deckungsgleich sind und entsprechend der Achse A senkrecht zu der Darstellungsebene verlaufen, welche der durch die Achsen X und Y aufgespannten Ebene entspricht. Sind die Rotationsachsen abweichend von diesem Optimalfall in Richtung der Achse X und/oder der Achse Y, also in der Ebene versetzt oder haben die Rotationsachsen einen Winkelversatz zueinander, kommt es bei einer Rotation des Stirnrades 31 dazu, dass dessen die Außenverzahnung bildenden Zähne in den jeweils korrespondierenden und aus jeweils zwei Zähnen der Innenverzahnung gebildeten Zahnlücken der Innenverzahnung ungleichmäßig belastet werden oder im Verlauf einer Umdrehung des Stirnrades 31 um dessen Rotationsachse auf und ab bewegen bzw. oszillieren. Hierdurch kommt es zwar zu geringfügigen Reibungsverlusten, welche jedoch zur Herstellung des Toleranzausgleichs bzw. des Versatzausgleichs der Rotationsachsen in Kauf genommen werden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. System aus einer Gruppe von Motoren, aus welcher ein Motor (10) ausgewählt ist, einer Gruppe von Getrieben, aus welcher ein Getriebe (20) ausgewählt ist, und einer Kupplung (30) zur Herstellung einer Antriebseinheit (1) aus aus einem der ausgewählten Motoren (10), aus einem der ausgewählten Getrieben (20) und der Kupplung (30),
wobei die Kupplung (30) ausgebildet ist, ein Antriebsmoment von einer Welle (11) des Motors (10) auf eine Antriebswelle (21) des Getriebes (20) zu übertragen,
wobei die Kupplung (30) ein Stirnrad (31) und eine Kupplungshülse (32) aufweist,
wobei das Stirnrad (31) drehfest mit der Welle (11) des Motors (10) und die Kupplungshülse (32) drehfest mit der Antriebswelle (21) des Getriebes (20) verbunden sind,
wobei das Stirnrad (31) eine Stirnverzahnung und die Kupplungshülse (32) eine Innenverzahnung aufweisen, welche korrespondierend zueinander eine Steckverbindung bilden und derart ausgebildet sind, dass die Stirnverzahnung kraftfrei in die Innenverzahnung eingesteckt ist,
wobei die Motoren der Gruppe von Motoren sich bezüglich ihrer Abmessungen unterscheiden und
wobei die Getriebe der Gruppe von Getrieben sich bezüglich ihrer Abmessungen unterscheiden,
wobei ein Kupplungsgehäuse (33) der Kupplung (30), drehfest an einem Getriebegehäuse (22) des Getriebes (20) und einem Motorgehäuse (12) des Motors (10) fixierbar und ausgebildet ist, diese drehfest miteinander zu verbinden.

2. System nach Anspruch 1,
wobei die Kupplungshülse (32) integral als die Antriebswelle (21) des Getriebes (20) oder integral mit der Antriebswelle (21) des Getriebes (20) ausgebildet ist.

3. System nach einem der vorhergehenden Ansprüche 1 oder 2,
wobei die Stirnverzahnung als eine Evolventenverzahnung ausgebildet ist.

4. System nach einem der vorhergehenden Ansprüche,
wobei das Stirnrad (31) durch Reibschluss oder Formschluss drehfest mit der Welle (11) des Motors (10) verbunden ist.

5. System nach einem der vorhergehenden Ansprüche,
wobei zwischen der Stirnverzahnung und der Innenverzahnung ein Verzahnungsspiel vorgesehen und das Verzahnungsspiel ausgebildet ist, einen angularen und/oder achsparallelen Versatz einer Rotationsachse des Stirnrades (31) zu einer Rotationsachse der Kupplungshülse (32) auszugleichen.

6. System nach einem der vorhergehenden Ansprüche,
wobei das Kupplungsgehäuse (33) die aus dem Stirnrad (31) und der Kupplungshülse (32) gebildete Steckverbindung in Umfangrichtung umläuft und ausgebildet ist, die Steckverbindung gegenüber einer Umgebung abzudichten.

7. System nach einem der beiden vorhergehenden Ansprüche,
wobei das Kupplungsgehäuse (33) zumindest ein Zentrierelement und/oder zumindest ein Ausrichtelement (34) aufweist, entlang welcher das Motorgehäuse (12) und/oder das Getriebegehäuse (22) in das Kupplungsgehäuse (33) geführt einsteckbar sind/ist.

8. System nach einem der vorhergehenden Ansprüche,
wobei an dem Motor (10) und/oder an dem Getriebe (20) und/oder an der Kupplung (30) zumindest eine Positionierungsmarkierung zur Montage mit dem Stirnrad (31) und/oder der Kupplungshülse (32) in einer vorbestimmten Drehwinkelposition vorgesehen ist.

## Claims

1. A system comprising a group of motors from which a motor (10) is selected, a group of gear mechanisms from which a gear mechanism (20) is selected, and a coupling (30) for creating a drive unit (1) from one of the selected motors (10), one of the selected gear mechanisms (20), and the coupling (30),
wherein the coupling (30) is designed to transmit a drive torque from a shaft (11) of the motor (10) to a drive shaft (21) of the gear mechanism (20),
wherein the coupling (30) has a spur gear (31) and an coupling sleeve (32),
wherein the spur gear (31) is non-rotatably connected to the shaft (11) of the motor (10) and the coupling sleeve (32) is non-rotatably connected to the drive shaft (21) of the gear mechanism (20),
wherein the spur gear (31) has a spur toothing and the coupling sleeve (32) has an internal gear, these forming a mutually corresponding plug-in connection and being embodied such that the spur toothing is inserted without application of force into the internal gear,
wherein the motors of the group of motors differ in their dimensions, and
wherein the gear mechanisms of the group of gear mechanisms differ in their dimensions,
a coupling housing (33) of the coupling (30) being non-rotatably fixable to a gear mechanism housing (22) of the gear mechanism (20) and to a motor housing (12) of the motor (10) and being designed to non-rotatably connect them to one another.

2. The system according to claim 1,
wherein the coupling sleeve (32) is formed integrally as the drive shaft (21) of the gear mechanism (20) or integrally with the drive shaft (21) of the gear mechanism (20).

3. The system according to any one of preceding claims 1 or 2,
wherein the spur toothing is embodied as an involute toothing.

4. The system according to any one of the preceding claims,
wherein the spur gear (31) is non-rotatably connected to the shaft (11) of the motor (10) by frictional engagement or positive engagement.

5. The system according to any one of the preceding claims,
wherein a tooth clearance is provided between the spur toothing and the internal toothing, and the tooth clearance is designed to compensate for an angular and/or axially parallel offset of a rotation axis of the spur gear (31) relative to a rotation axis of the coupling sleeve (32).

6. The system according to any one of the preceding claims,
wherein the coupling housing (33) runs around the plug-in connection formed from the spur gear (31) and the coupling sleeve (32) in the circumferential direction and is designed to seal the plug-in connection off from the environment.

7. The system according to any one of the two preceding claims,
wherein the coupling housing (33) has at least one centering element and/or at least one alignment element (34) along which the motor housing (12) and/or the gear mechanism housing (22) can be inserted in a guided manner into the coupling housing (33).

8. The system according to any one of the preceding claims,
wherein at least one positioning mark is provided on the motor (10) and/or on the gear mechanism (20) and/or on the coupling (30) for assembly with the spur gear (31) and/or the coupling sleeve (32) in a predetermined rotational angle position.

## Revendications

1. Système composé d'un groupe de moteurs dont un moteur (10) est sélectionné, d'un groupe de transmissions dont une transmission (20) est sélectionnée, et d'un accouplement (30) pour créer une unité d'entraînement (1) à partir d'un des moteurs sélectionnés (10), d'une des transmissions sélectionnées (20) et de l'accouplement (30),
dans lequel l'accouplement (30) est réalisé pour transmettre un couple d'entraînement d'un arbre (11) du moteur (10) à un arbre d'entraînement (21) de la transmission (20),
dans lequel l'accouplement (30) présente un engrenage droit (31) et une douille d'accouplement (32),
dans lequel l'engrenage droit (31) est relié de manière solidaire en rotation à l'arbre (11) du moteur (10) et la douille d'accouplement (32) est reliée de manière solidaire en rotation à l'arbre d'entraînement (21) de la transmission (20),
dans lequel l'engrenage droit (31) présente une denture droite et la douille d'accouplement (32) présente une denture intérieure qui constituent un emboîtement mutuellement correspondant et sont réalisées de telle sorte que la denture droite est emboîtée dans la denture intérieure à force d'insertion nulle,
dans lequel les moteurs du groupe de moteurs se distinguent quant à leurs dimensions, et
dans lequel les transmissions du groupe de transmissions se distinguent quant à leurs dimensions,
dans lequel un carter d'accouplement (33) de l'accouplement (30) peut être fixé de manière solidaire en rotation à un carter de transmission (22) de la transmission (20) et à un carter de moteur (12) du moteur (10) et est réalisé pour les relier ensemble de manière solidaire en rotation.

2. Système selon la revendication 1, dans lequel la douille d'accouplement (32) est réalisée intégralement sous la forme de l'arbre d'entraînement (21) de la transmission (20) ou intégralement avec l'arbre d'entraînement (21) de la transmission (20).

3. Système selon l'une quelconque des revendications précédentes 1 ou 2, dans lequel la denture droite est réalisée sous la forme d'une denture à développante.

4. Système selon l'une quelconque des revendications précédentes, dans lequel l'engrenage droit (31) est relié de manière solidaire en rotation à l'arbre (11) du moteur (10) par adhérence ou par complémentarité de forme.

5. Système selon l'une quelconque des revendications précédentes, dans lequel un jeu de denture est prévu entre la denture droite et la denture intérieure, et le jeu de denture est réalisé pour compenser un décalage angulaire et/ou parallèle à l'axe d'un axe de rotation de l'engrenage droit (31) par rapport à un axe de rotation de la douille d'accouplement (32).

6. Système selon l'une quelconque des revendications précédentes, dans lequel le carter d'accouplement (33) contourne dans la direction circonférentielle l'emboîtement formé par l'engrenage droit (31) et la douille d'accouplement (32) et est réalisé pour rendre l'emboîtement étanche par rapport à un environnement.

7. Système selon l'une des deux revendications précédentes, dans lequel le carter d'accouplement (33) présente au moins un élément de centrage et/ou au moins un élément d'alignement (34) le long duquel/desquels le carter de moteur (12) et/ou le carter de transmission (22) est/sont emboîtable(s) dans le carter d'accouplement (33) en étant guidé(s).

8. Système selon l'une quelconque des revendications précédentes, dans lequel au moins un repère de positionnement est prévu sur le moteur (10) et/ou sur la transmission (20) et/ou sur l'accouplement (30) pour le montage avec l'engrenage droit (31) et/ou la douille d'accouplement (32) dans une position d'angle de rotation prédéterminée.
